# EUROPEAN PATENT APPLICATION

(11) **EP 1 814 016 A1**
(43) Date of publication of application: **01.08.2007**
(21) Application number: 06001837.1
(22) Date of filing: 30.01.2006
(51) Int. Cl.: G06F 1/26, H02J 7/00

(54) **Portable power supply for USB devices**

(71) Applicant: Samya Technology Co., Ltd., Taoyuan City Taoyuan Country 330 (TW)
(72) Inventor: Yang, Fu-I, Taoyuan City Taoyuan Country 330 (TW)
(74) Representative: Casalonga, Axel

(57) **Abstract**

A portable power supply includes a slender casing (10) having a compartment (11) disposed axially for installing and electrically connecting a battery (20), a DC-to-DC voltage booster circuit (30) installed on a first circuit board (31) in the casing (10) for boosting a low-voltage current outputted by the battery (20) to 5V DC power, and a USB output socket (40) having a port (41) at a front end of the casing (10), and a first pin (42) at an internal side is electrically connected to the first circuit board (31) for obtaining the 5V DC power outputted by the voltage booster (30) circuit to supply power to a USB plug (50) connected to the USB output socket (40). The rear end of the casing (10) includes a USB input plug (60) and a charging control circuit (70) for obtaining an external power to charge the secondary battery in the compartment. The present invention provides a portable emergency power supply for supplying power to electronic products anytime.

## Description

The invention relates to a portable power supply, and more particularly to a portable emergency power supply having a slender casing, a battery compartment disposed along its axial direction to form a power supply terminal, and a USB output socket installed in the casing and electrically connected to a DC-to-DC voltage booster circuit.

As electronic and communication technologies advance rapidly, portable electronic products such as digital cameras, MP3s, PDAs, and 3C mobile phones become increasingly popular, and these electronic products have a common feature that uses a rechargeable secondary battery, such as a Ni-H battery for supplying power. However, electronic products adopting a secondary battery usually have a problem of charging the battery, when the battery is exhausted, and it is necessary to recharge the battery while the users go out.

For example, if a 3C mobile phone is used for dialing or receiving a call or watching a television program and the power of the battery is very low, a signal disconnection or a loss of important messages may occur. Furthermore, the price of lithium batteries is very high, and each lithium battery costs more than one or two thousand NT dollars. If a number of backup batteries are added, then the price of the electric products will be increased greatly. If a person owns two or more mobile phones of different specifications, then the person has to use different types of lithium batteries. Further, a portable electronic product such as MP3, PDA and digital camera requires a lithium battery of another specification, and thus users have to carry many lithium batteries of different specifications. The prior art not only fails to comply with the cost-effective purpose, but also causes inconvenience and a burden for users to carry the batteries.

Therefore, it is a primary object of the invention to provide a slender, light, small, and easy-to-carry portable power supply that can serve as an emergency power supply for supplying power to electronic products anytime and anywhere.

Another object of the present invention is to provide a portable power supply which has a USB output socket for outputting a 5V power, and uses the present popular USB plug to connect several electronic products to obtain power anytime. Only one USB portable power supply is needed to supply a standard 5V DC power to various different electronic products, and thus the present invention has a one-fits-all feature, which is easy to carry and capable of lowering costs.

In order to reach the above-mentioned objects, the portable power supply includes:
a) a slender casing, having a compartment disposed along an axial direction, and at least one set of anode and cathode contact points disposed in the compartment for electrically connecting a battery to define a power supply terminal;
b) a DC-to-DC voltage booster circuit, installed on a first circuit board and disposed in the casing for boosting a low-voltage current outputted by the battery to a 5V DC power; and
c) a USB output socket, disposed along the axial direction of the compartment and being in a female connector configuration, such that a port at an opening of the USB output socket being disposed at a front end of the casing, and a first pin disposed at an internal side being electrically connected to the first circuit board for obtaining the 5V DC power outputted by the voltage booster circuit, so as to supply power to a USB plug connected to the USB output socket.

The compartment is provided for installing and electrically connecting a secondary battery selected from any of a nickel-hydrogen battery and a lithium battery to form a power supply terminal.

The compartment is provided for installing and electrically connecting a primary battery selected from any of an alkaline/hydrogen-oxygen battery, a fuel cell, and a solar energy battery to form a power supply terminal.

The compartment is provided for installing and electrically connecting one or two pieces of primary/secondary batteries.
FIG. 1 is a perspective view of a first preferred embodiment of the invention;
FIG. 2 is a perspective view of an application according to a first preferred embodiment of the invention;
FIG. 3 is a top view of a first preferred embodiment of the invention;
FIG. 4 is a cross-sectional view of Section 4-4 as depicted in FIG. 3;
FIG. 5 is a block diagram of a first preferred embodiment of the invention;
FIG. 6 is a schematic view of a second preferred embodiment of the invention;
FIG. 7 is a schematic view of a third preferred embodiment of the invention;
FIG. 8 is a cross-sectional view of Section 8-8 as depicted in FIG. 7;
FIG. 9A, 9B, and 9C are a front view, a side view, and a rear view of an application according a third preferred embodiment of the invention;
FIG. 10 is a schematic view of another application according to a third preferred embodiment of the invention;
FIG. 11 is a schematic view of a fourth preferred embodiment of the invention; and
FIG. 12 is a block diagram of a fourth preferred embodiment of the invention.

The present invention will now be described in more detail hereinafter with reference to the accompanying drawings that show various embodiments of the invention.

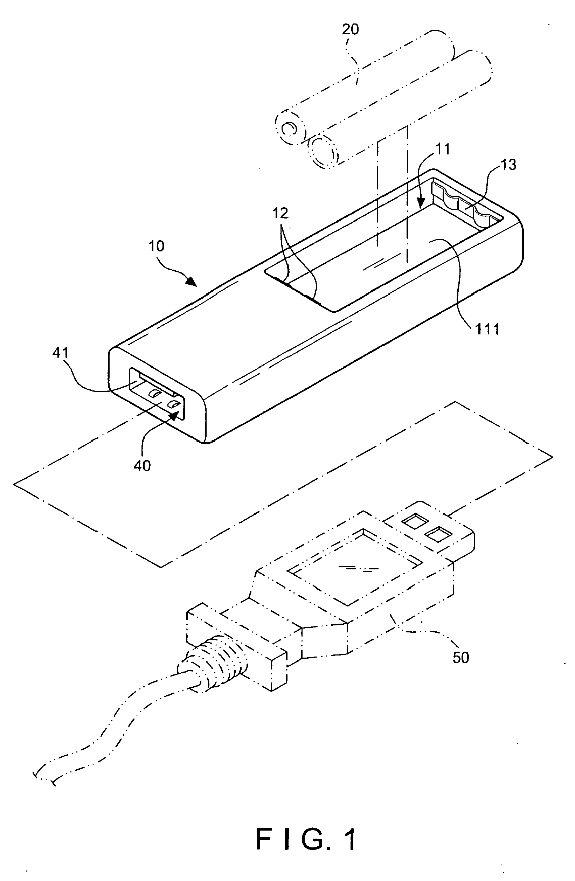

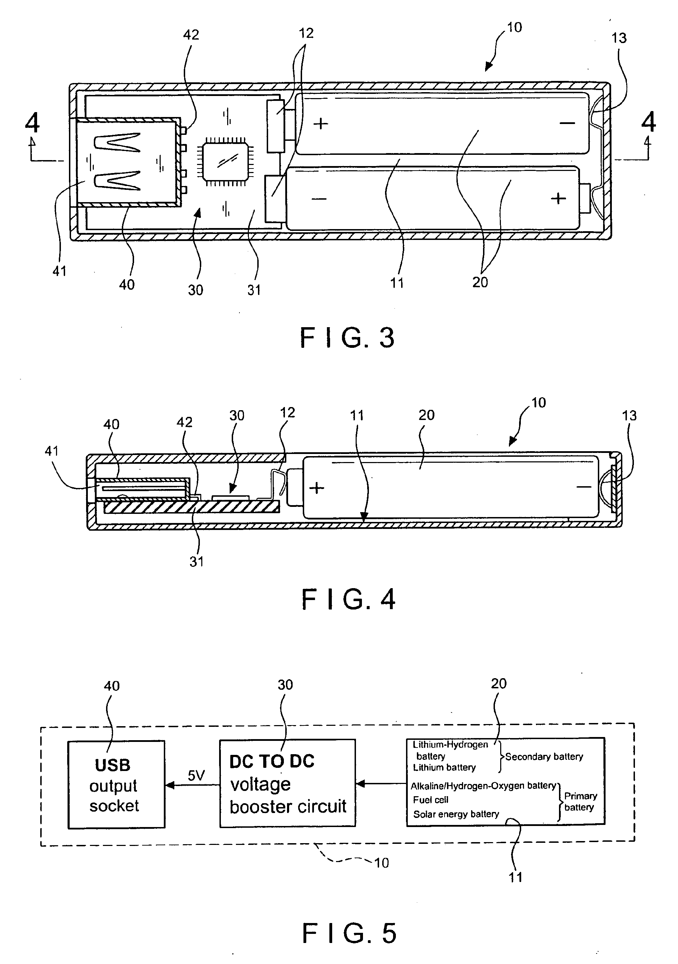

Referring to FIGS. 1 to 5, a first preferred embodiment of the present invention comprises a slender casing 10 having a compartment 11 disposed along an axial direction (x-x), and the compartment 11 has at least one set of anode and cathode contact points 12, 13 as shown in FIG. 3, and two electric conducting contact points 12, one being an anode contact point, and another being a cathode contact point are disposed at the front of the compartment 11, and an electric conducting contact point 13 disposed at the back of the compartment 11 is electrically connected to an anode and a cathode of the two batteries 20 to define an electric circuit and form a power supply terminal.

Referring to FIGS. 3 to 5, a DC-to-DC voltage booster circuit 30 is installed on a first circuit board 31 and disposed in the casing 10 for boosting a low-voltage current outputted by the battery 20 to a 5V DC power. Such design bases on the AA/3 or AAA/4 alkaline battery, which has a voltage of 1.5V each, and if two of these batteries are connected in series, the voltage will be 3V only. A general 3C electronic product usually requires a voltage between 4V to 5V, and thus two pieces of batteries 20 are installed in the compartment 11 to serve as a power supply terminal. If there is no DC-to-DC voltage booster circuit, the voltage 1.5V or 3V outputted by the battery 20 will be boosted rapidly to 5V DC power, and such design cannot supply power required by the general electronic products. The capacity of an AA/3 alkaline battery is about 2100mAh, and when such capacity is used for boosting the voltage from 3V to 5V, the capacity is converted to 750mAh. If an appropriate boost converter is used, a high conversion rate of 75% can be achieved. The voltage booster circuit of this preferred embodiment includes but not limited to an IC MAX631 (3V→5V) boost converter, and the size of the voltage booster circuit 30 adopting such components will not be too large, so that the first circuit board 31 can be placed at a position in the front section of the casing 10. Since the DC-to-DC voltage booster circuit 30 which is a prior art, its technical characteristic will not be described here.

The foregoing voltage booster circuit 30 obtains an output of 5V, 40mA, and thus the efficiency is 75%. If its coil is adjusted to reduce the output current to 5V, 25mA, then the efficiency will be improved to 85%, which can provide a power supply to the electronic products for at least several hours. Furthermore, if the voltage of the battery 20 drops to 1.0V (0.5Vx2), the (3V→5V) voltage booster circuit can fit the lithium batteries of a larger power capacity.

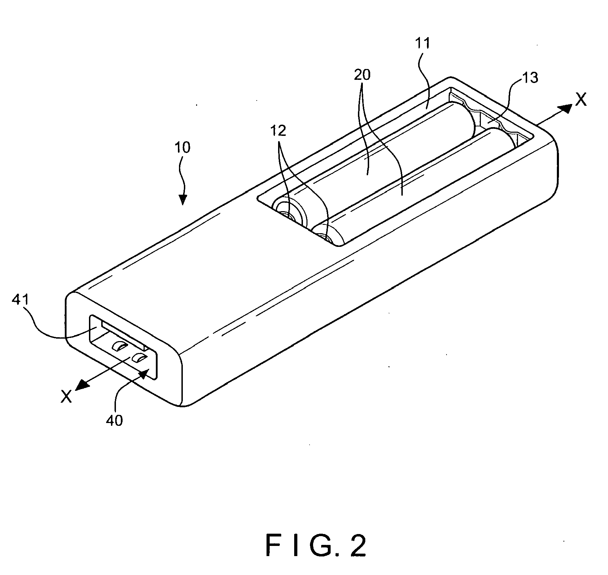

In the figures above, the present invention also comprises a USB output socket 40 installed along the axial direction (x-x) of the compartment 11 and in a female connector configuration as shown in FIGS. 2 and 3. A port 41 is disposed at the opening of the USB output socket 40 at the front end of the casing 10, and a first pin 42 disposed at an internal side is electrically connected to the first circuit board 31 for obtaining the 5V DC power outputted by the voltage booster circuit 30, so as to supply the power required by a USB plug 50 connected to the USB output socket 40 as shown in FIG. 1. The present invention is characterized in that a female connector configuration is adopted for the USB output socket 40, and a 5V DC power is supplied by the DC-to-DC voltage booster circuit 30, since the USB plug 50 is very popular, and many electronic products can obtain the required electric power through the USB plug 50. For example, the USB plug of a MP3 is installed integrally with the casing. Further, other electronic products can be connected to the portable power supply of the invention to obtain the required power quickly and conveniently through a USB cable.

With the foregoing technical measures, the present invention is just like a portable power supply as shown in FIG. 5, and users just need to install a secondary battery such as a rechargeable Ni-H battery or lithium battery in the compartment 11 or simply buy two pieces of alkaline/hydrogen-oxygen primary batteries from a store for the occasion, and then install the batteries into the compartment 11 for supplying the 5V DC power to the USB output socket 40 conveniently.

Referring to FIGS. 1 to 4, the compartment 11 can be designed according to actual requirements for installing two pieces of Ni-H or alkaline batteries 20, since such primary or secondary batteries are popular and can be accessed easily. As to the fuel cells and solar energy batteries, their sizes are small and will become popular, and thus these batteries can be used as power supply terminals as well.

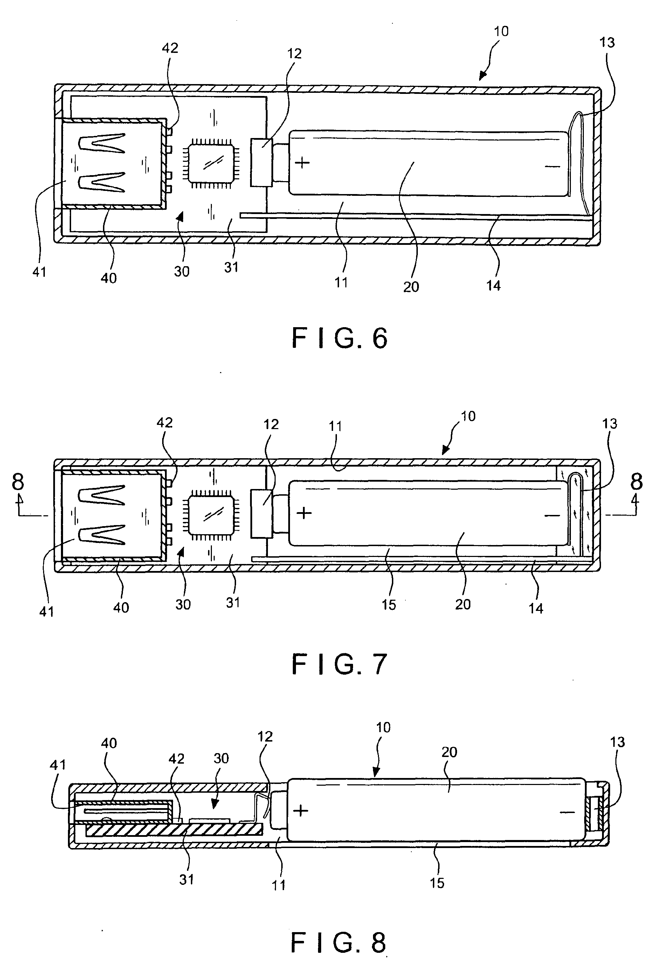

Referring to FIG. 6 for the schematic view of a second preferred embodiment of the present invention, same numerals are used to indicate the same elements as described in the first preferred embodiment, and the difference resides on that the compartment 11 is provided for installing and electrically connecting only one piece of battery 20, and thus the cathode contact point 13 connects an electric conducting element (such as an electric line) to the first circuit board 31, so as form an electric circuit and supply 1.5V current to the voltage booster circuit 30.

Referring to FIGS. 7 and 8 for the schematic views of a third preferred embodiment of the present invention, same numerals are used to indicate the same elements as described in the second preferred embodiment, and the difference resides on that the width of the casing 10 is reduced, so that it does not occupy too much space, and its bottom surface has a rectangular through hole 15, and thus when it is necessary to remove the battery 20, the battery 20 can be pushed through the rectangular through hole 15 at the bottom of the compartment 11 to take out the battery 20.

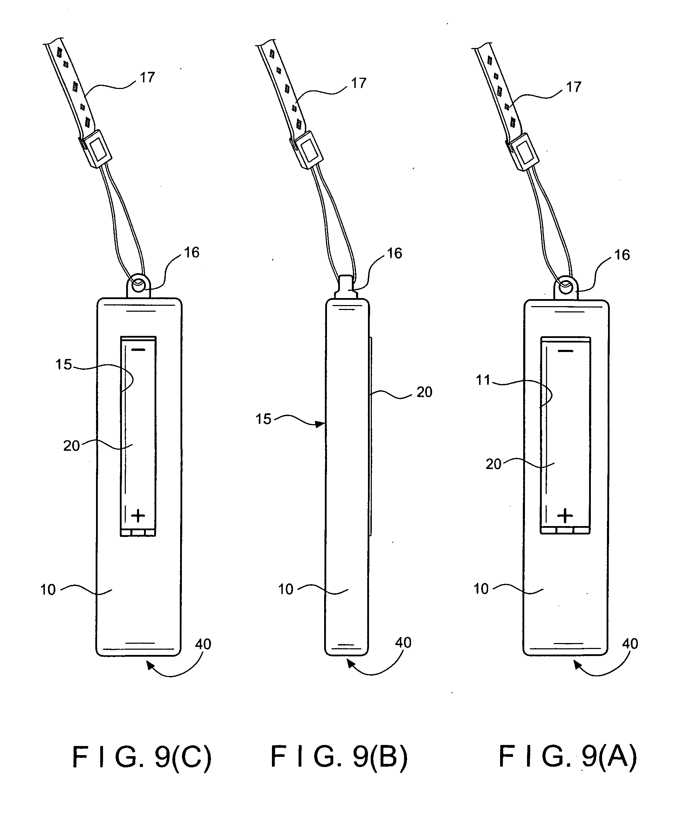

Referring to FIGS. 9A, 9B, and 9C for the front view, the side view, and the bottom view of a third preferred embodiment of the present invention respectively, the compartment 11 installs one piece of AAA/4 battery 20, and thus the casing 10 is designed in a slender form with a length of approximately 8cm, a width of approximately 1.9cm, and a thickness of approximately 1.0cm. Such a small volume allows users to carry the battery conveniently, and the USB output socket 40 has a ring 16 disposed on another end for passing a hanging strap 17, so as to form a hanging decoration and provide an easy access anytime.

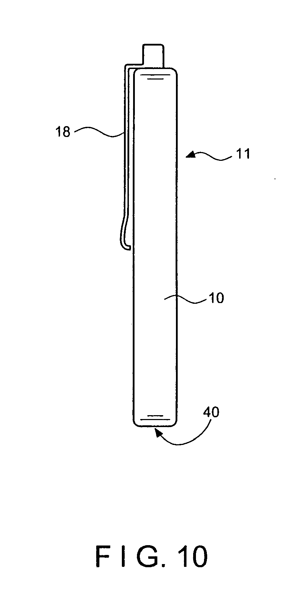

Referring to FIG. 10 for another view of using a third preferred embodiment of the present invention, the casing 10 includes an elastic clip 18 disposed on a back lateral side of the casing 10 to form a pen-like member to be clipped to a pocket and provide an easy access anytime.

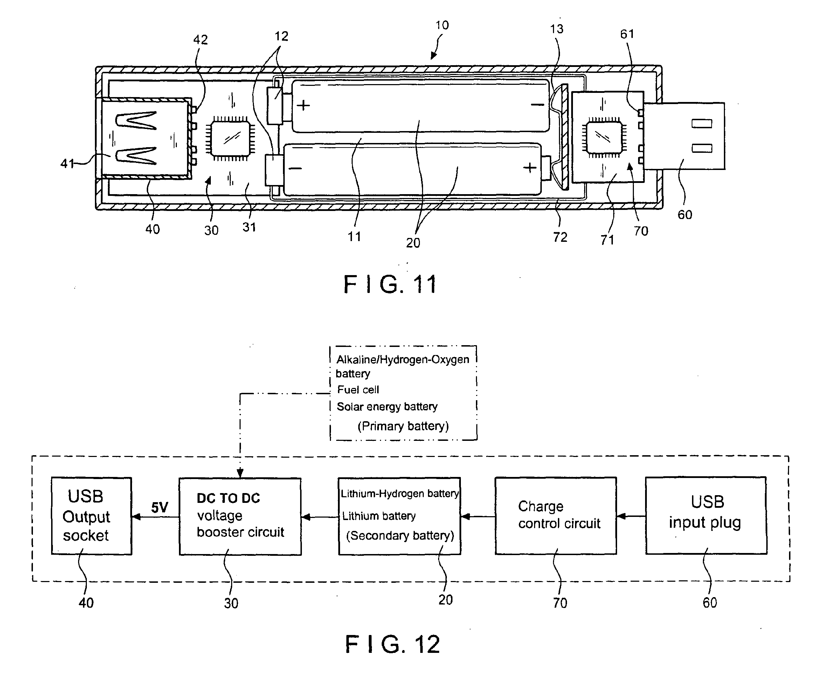

Referring to FIGS. 11 and 12 for a fourth preferred embodiment of the present invention, same numerals are used to indicate the same elements as described in the previous preferred embodiments, and the difference resides on that the rear end of the casing 10 further comprises:
a protruding USB input plug 60, plugged into a USB socket for obtaining a DC power to charge a battery; and
a charging control circuit 70, installed on a second circuit board 71, for fixing and electrically connecting a second pin 61 on an internal side of the USB input plug 60, and the second circuit board 71 includes a conducting wire 72 for electrically connecting the electric conducting contact point 12 of the first circuit board 31 to charge the secondary battery 20 in the compartment 11.

Although this preferred embodiment has increased the portable power supply of the present invention by approximately 3.0cm, the USB input plug 60 allows users to access a 5V power easily and the charging control circuit 70 to charge the secondary battery 20 including the Ni-H battery or the lithium battery, and thus the present invention has the function of charging batteries. Certainly, if the battery installed in the compartment 11 is not a secondary battery but a general primary battery, then the charging control circuit 70 will not take action, and the battery can directly output a current to the DC-to-DC voltage booster circuit 30 to form the power supply terminal. The charging control circuit is a prior art, and thus will not be described here.

With the aforementioned technical measures, the present invention only needs one portable USB power supply for supplying the 5V DC power to various different electronic products, and thus the present invention provides a one-fits-all function and has the advantages of providing a convenient portable device and saving costs.

Many changes and modifications in the above-described embodiments of the invention can, of course, be carried out without departing from the scope thereof. Accordingly, to promote the progress in science and the useful arts, the invention is disclosed and is intended to be limited only by the scope of the appended claims.

## Claims

1. A portable power supply, comprising:
a) a slender casing (10), having a compartment (11) disposed along an axial direction, and at least one set of anode and cathode contact points (12) (13) disposed in said compartment (11) for electrically connecting a battery to define a power supply terminal;
b) a DC-to-DC voltage booster circuit (30), installed on a first circuit board (31) and disposed in said casing (10) for boosting a low-voltage current outputted by said battery (20) to a 5V DC power; and
c) a USB output socket (40), disposed along the axial direction of said compartment (11) and being in a female connector configuration, such that a port (41) at an opening of said USB output socket (40) being disposed at a front end of said casing (10), and a first pin (42) disposed at an internal side being electrically connected to said first circuit board (31) for obtaining the 5V DC power outputted by said voltage booster circuit, so as to supply power to a USB plug (50) connected to said USB output socket (40).

2. The portable power supply of claim 1, wherein said compartment (11) is provided for installing and electrically connecting a secondary battery (20) selected from any of a nickel-hydrogen battery and a lithium battery to form a power supply terminal.

3. The portable power supply of claim 1, wherein said compartment (11) is provided for installing and electrically connecting a primary battery selected from any of an alkaline/hydrogen-oxygen battery, a fuel cell, and a solar energy battery to form a power supply terminal.

4. The portable power supply of claim 1, wherein said compartment (11)is provided for installing and electrically connecting one or two pieces of primary/secondary batteries.

5. The portable power supply of claim 1, wherein said compartment (11) includes a rectangular groove hole (15) disposed at the bottom surface of said compartment (11).

6. The portable power supply of claim 1, wherein said casing (10) further comprises a ring (16) disposed at another end opposite to said USB output socket (40) for passing a hanging strap (17) to constitute a hanging decoration and provide an easy carry and use of said portable power supply.

7. The portable power supply of claim 1, wherein said casing (10) further comprises an elastic clip (18) disposed at a back side of said casing (10) and being in form of a pen to be clipped onto a pocket.

8. A portable power supply of claim 1, wherein the tail of said casing (10) further comprises:
a) a protruding USB input plug (60), introduced into said USB socket for obtaining a DC power to charge said battery; and
b) a charging control circuit (70), installed on a second circuit board (71) for fixing and electrically connecting a second pin (61) disposed on an internal side of said USB input plug (60), and said second circuit board (71) including a conducting wire (72) and being electrically connected with an electric conducting contact point (12) on said first circuit board (31), so as to charge a secondary battery (20) installed in said compartment (11).

9. A portable power supply, comprising:
a) a slender casing (10), having a compartment (11) disposed along an axial direction, and at least one set of anode and cathode contact points (12) (13) disposed in said compartment (11) for electrically connecting a battery (20) to define a power supply terminal;
b) a DC-to-DC voltage booster circuit (30), installed on a first circuit board (31) and disposed in said casing (10) for boosting a low-voltage current outputted by said battery (20) to a 5V DC power;
c) a USB output socket (40), disposed along the axial direction of said compartment (11) and being in a female connector configuration, such that a port (41) at an opening of said USB output socket (40) being disposed at a front end of said casing (10), and a first pin (42) disposed at an internal side being electrically connected to said first circuit board (31) for obtaining the 5V DC power outputted by said voltage booster circuit (30), so as to supply power to a USB plug (50) connected to said USB output socket (40);
d) a protruding USB input plug (60), installed at a rear end of said casing (10) and plugged into said USB socket for obtaining a DC power to charge said battery; and
e) a charging control circuit (70), installed on a second circuit board (71) for fixing and electrically connecting a second pin (61) disposed on an internal side of said USB input plug (60), and said second circuit board (71) including a conducting wire (72) and being electrically connected with an electric conducting contact point (12) on said first circuit board (31), so as to charge a secondary battery (20) installed in said compartment (11).
